# EUROPEAN PATENT APPLICATION

(11) **EP 1 862 729 A1**
(43) Date of publication of application: **05.12.2007**
(21) Application number: 07010087.0
(22) Date of filing: 21.05.2007
(51) Int. Cl.: F21V 7/09

(54) **Light source device**

(30) Priority: 30.05.2006 JP 2006150158; 28.07.2006 JP 2006205569
(71) Applicant: USHIODENKI KABUSHIKI KAISHA, Chiyoda-ku 100 Tokyo (JP)
(72) Inventor: Kobayashi, Yuichi c/o Ushio Inc., Himeji-shi Hyogo-ken (JP)
(74) Representative: Tomerius, Isabel

(57) **Abstract**

A light source device (10) has a discharge lamp (1) in which within the discharge vessel there is a pair of opposed electrodes (13,14), a concave reflector (2) which has an ellipsoidal front reflector part (22) which is provided with a light exit opening, and a spherical reflector part (24) which borders the back end of the ellipsoidal front reflector part, is improved in that the middle between the electrodes (13,14) of the discharge lamp is arranged with respect to the concave reflector (2) such that the middle is located in front of a virtual plane which includes the boundary region between the ellipsoidal front reflector part (22) and the spherical reflector part (24). The concave reflector can also have an ellipsoidal rear reflector part (26) which borders a back end of the spherical reflector part (24).

## Description

### Background of the Invention

### Field of the Invention

The invention relates to a light source device which is used as back light of a projection type projector device such as a liquid crystal display device, DLP^{®} (digital light processor) using a DMD^{®} (digital micromirror device) or the like.

### Description of Related Art

In a projection type projector device, there is a demand for illumination of images onto a rectangular screen, uniformly, and moreover, with adequate color rendering. To meet this demand, the light source is an ultra high pressure mercury lamp of the short arc type in which the mercury vapor pressure during operation is greater than or equal to 150 atm, in combination with a concave reflector, such as an ellipsoid reflector or the like.

Recently, there has been a great demand from users of projector devices that can be used at different locations instead of setting up conference rooms or the like with permanently installed projector devices that are continuously available for use. The projector devices are therefore becoming smaller, in addition to the conventional trend. The smaller the projector devices become, the smaller also especially the concave reflector for the light source device becomes.

However, if simply only the concave reflector is made smaller, the effective reflection area of the concave reflector becomes smaller, by which the light flux which is emitted from the light source device is reduced. Furthermore, recently, in addition to the above described reduction in the size of the light source device, there has also been a demand for a higher level of illuminance of the focusing point of the projector device than in the past. This demand cannot be met simply by making the concave reflector smaller.

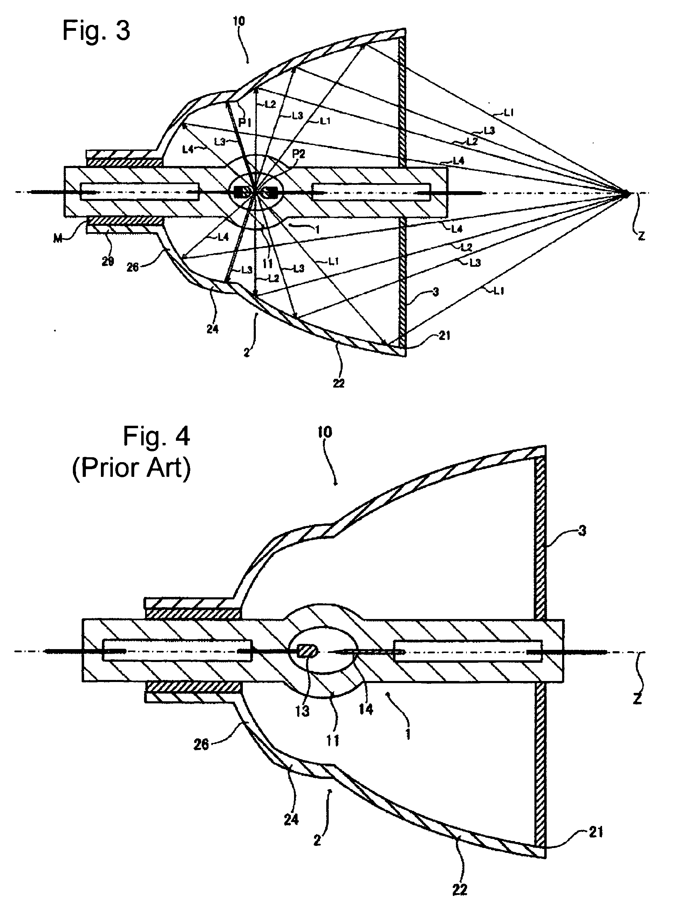

As technology for increasing the efficiency of use of the light flux without reducing the effective reflection area of the concave reflector, Japanese patent JP 3567988 B2 shows a light source device which has a concave reflector which has a front reflector part which forms a light exit opening, a middle reflector part which is positioned behind the front reflector part, and a rear reflector part which is positioned behind the middle reflector part. The light source device shown in the above described publication is described below using Figure 4.

Figure 4 shows a schematic cross section of the arrangement of a conventional light source device. In Figure 4, the light source device 10 has a discharge lamp 1 and a concave reflector 2. The discharge lamp 1 is operated using a direct current, and there are an anode 13 and a cathode 14 disposed opposite each other within the arc tube part 11. The concave reflector 2 in the state in which its optical axis Z agrees with the direction of the arc of the discharge lamp 1 (direction in which the anode 13 and the cathode 14 extend) is arranged such that the discharge lamp 1 is surrounded by the reflector.

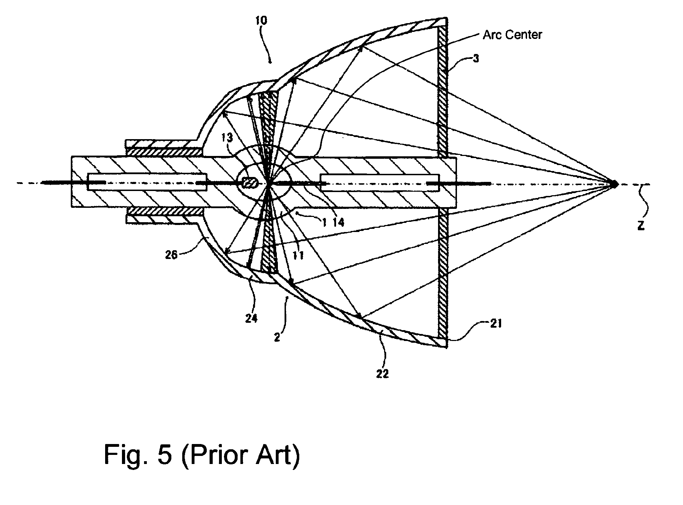

The concave reflector 2 has an overall concave shape composed of a front reflector part 22 which has a light exit opening 21, a middle reflector part 24 which borders the back end of the front reflector part 22, and a rear reflector part 26 which borders the back end of the middle reflector part 24, i.e., is formed of three reflector parts. The position of the first focal point of the oval reflector with respect to the front reflector part 22, the middle position of the spherical reflector of the middle reflector part 24 and the position of the first focal point of the ellipsoid reflector with respect to the rear reflector part 26 all essentially agree with the middle of the arc of the discharge lamp 1. In the discharge lamp shown in Figure 5, the vicinity of the tip of the cathode 14 constitutes the arc center. Furthermore, the discharge lamp is in the state in which the position of the second focal point of the ellipsoid reflector with respect to the front reflector part 22 and the position of the second focal point of the ellipsoid reflector with respect to the rear reflector part 26 agree with one another.

The front reflector part 22 is located at the position at which the front edge, which forms the light exit opening 21, extends from the arc tube part 11 of the discharge lamp 1 far forward. Moreover, it is in the state in which its rear edge is at a position which is somewhat to the rear from the vicinity of the middle of the arc of the discharge lamp, and moreover, slightly forward from the middle position between the anode 13 and the cathode 14 so that the front reflector part 22 borders the forward edge of the middle reflector part 24, and in which the rear edge of the middle reflector part 24 borders the front edge of the rear reflector part 26.

Light is emitted by the light source device with the above described arrangement from the arc which is formed in the vicinity of the tip of the cathode 14 of the discharge lamp 1. As shown in Figure 5, the light which is incident in the front reflector part 22 is reflected unchanged, emitted forward from the light exit opening 21 of the front edge of the front reflector part 22, and focused at the position of the second focal point of the front reflector part 22.

On the other hand, of the light emitted by the arc, the light which is incident from the front reflector part 22 in the rear of the middle reflector part 24 is returned to the arc, since the middle of the middle reflector part 24, as a spherical mirror, essentially agrees with the middle of the arc. Moreover, the returned light passes through the arc, is emitted in the direction toward the front reflector part 22, is reflected by the front reflector part 22 and is focused on the second focal point.

By the above described light source device with the concave reflector 2, of three reflector parts, in addition to the light which is incident in the front reflector part 22 as an ellipsoid reflector and in the middle reflector part 24 as a spherical reflector, part of the light which could not conventionally be effectively used and which is directed to the rear from the arc, can be focused directly forward by the rear reflector part 26 as an ellipsoid reflector so that the efficiency of light use is high.

However, in the above described light source device, it was difficult, for the above described reasons, to fix the illuminance at the focusing point of the projector device at greater than or equal to the amount which is required by a projector device of recent years.

As shown in Figure 5 in the crosshatched region with the broken-line arrows, of the light emitted from the arc which is formed in the vicinity of the tip of the cathode 14 of the discharge lamp 1, the light emitted in the direction which orthogonally intersects the optical axis Z and the light emitted in the direction which essentially orthogonally intersects the optical axis Z after incidence in the spherical reflector 24 are returned to the arc, pass through the arc and are again incident in the spherical reflector part 24. The light shown by the above described broken-line arrows therefore moves back and forth repeatedly on a straight line between the arc center and any two points on the spherical reflection area of the middle reflector part 24, until it is finally absorbed by the arc tube part 11 and is no longer emitted by means of the forward reflector part 22 through the light exit opening 21. When, of all the light which is emitted from the arc, the proportion of the light which is absorbed by the arc tube part 11 is increased, there is the disadvantage that the illuminance at the focusing point of the projector device does not reach the desired amount.

### Summary of the Invention

A primary object of the present invention, in a light source device which comprises:
- a discharge lamp; and
- a concave reflector which has a front ellipsoid reflector part which is provided with a light exit opening, and a spherical reflector part which borders the back end of the front ellipsoidal reflector part,
is to prevent the light which is incident in the spherical reflector part from moving back and forth on a straight line between the arc center and any two points on the reflection area of the spherical reflector part in order to reduce the proportion of light which is absorbed by the arc tube part of the discharge lamp, and thus, to increase the efficiency of light utilization.

The above described object is achieved in accordance with the invention in a light source device which comprises:
- a discharge lamp in which there is a pair of opposed electrodes within the discharge vessel,
- a concave reflector which has a front ellipsoid reflector part which is provided with a light exit opening, and a spherical reflector part which borders the back end of the front ellipsoid reflector part,
in that the middle between the electrodes of the above described discharge lamp is arranged with respect to the concave reflector such that it is located in front of a virtual plane which includes the boundary region between the front ellipsoid reflector part and the spherical reflector part.

Furthermore, the object is achieved in that, in the above described light source device, the relation 90° < X < 100° is satisfied where X is the angle, in a cross section through a plane which contains the optical axis of the light source device, between a line which runs through the middle between the electrodes between the border regions between the front ellipsoid reflector part and the spherical reflector part, and a line which runs from the middle between the electrodes along the optical axis in the direction of light emission.

The object is also achieved in that the above described concave reflector has a rear ellipsoid reflector part which borders the back end of the spherical reflector part.

The object is furthermore achieved in a concave reflector which comprises:
- a front ellipsoid reflector part which is provided with a light exit opening;
- a spherical reflector part which borders the back end of the front ellipsoid reflector part; and
- a rear ellipsoid reflector part which borders the back end of the spherical reflector part,
in that the first focal point of the front ellipsoid reflector part and the first focal point of the rear ellipsoid reflector part are located in front of a virtual plane which includes the boundary region between the front ellipsoid reflector part and the spherical reflector part.

An arrangement in front of a virtual plane which includes the boundary region between the front ellipsoid reflector part and the spherical reflector part here means an arrangement which is shifted forward in the direction to the light exit opening.

### Action of the Invention

In accordance with the invention, in a light source device which comprises the following:
- a discharge lamp in which in the discharge vessel there is a pair of opposed electrodes,
- a concave reflector which has a front ellipsoid reflector part which is provided with a light exit opening, and a spherical reflector part which borders the back end of the front ellipsoid reflector part,
the above described discharge lamp is located relative to the concave reflector such that the middle between the electrodes is located in front of a virtual plane which includes the boundary region between the front ellipsoid reflector part and the rear ellipsoid reflector part. Of the light emitted from the arc, all of the light which is incident in the spherical reflector is returned to the arc, passes through the arc, is incident in the front ellipsoid reflector part, is afterwards reflected by the front ellipsoid reflector part, is emitted in the direction to the light exit opening and is focused on the second focal point. Thus, it no longer happens that the light which is incident in the spherical reflector part of the concave reflector moves back and forth on a straight line between the arc center and any two points on the spherical reflection area of the spherical reflector part. Therefore, the efficiency of light utilization of the light source device is increased.

The invention is explained in detail below with reference to the accompanying drawings.

### Brief Description of the Drawings

Figure 1 is a schematic longitudinal cross-sectional view of the arrangement of a light source device in accordance with the invention in the lengthwise direction;

Figure 2 is an enlarge cross section of the electrodes of a discharge lamp in accordance with the invention;

Figure 3 is a schematic depiction of the emission state of the light from the light source device in accordance with the invention;

Figure 4 is view corresponding to that of Figure 1, but showing the arrangement of a conventional light source device; and

Figure 5 is a schematic depiction of the emission state of the light from the conventional light source device of Figure 4.

### Detailed Description of the Invention

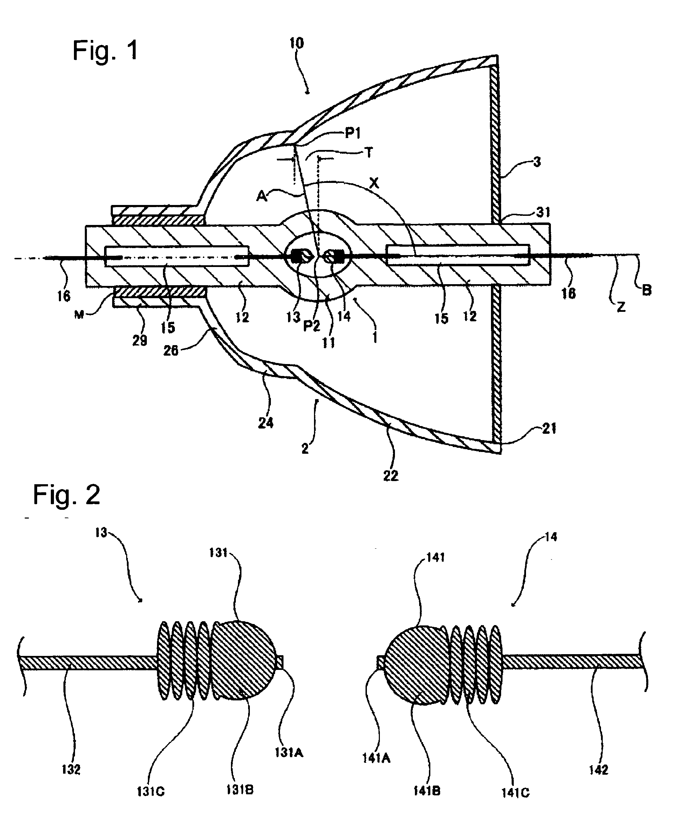

An example of a light source device in accordance with the invention is described below using Figures 1 & 3. Figure 1 is a cross section through a plane which includes the optical axis of the light source device in accordance with the invention. Figure 2 is an enlarged cross section of a pair of electrodes of the device in accordance with the invention. Figure 3 is a schematic of the emission state of the light from the light source device in accordance with the invention.

As is shown in Figure 1, the light source device 10 is made by a hermetically sealed portion 12 of a discharge lamp 1 being located in a hole 29 which is formed in the back end of a concave reflector 2 and by the concave reflector 2 and the hermetically sealed portions 12 being attached to one another by means of a cement M. In the following, "forward" means toward the light exit opening 21 and "backwards" means the direction toward the hole 29.

The discharge lamp 1 has an essentially spherical arc tube part 1 and cylindrical, hermetically sealed portions 12 which border the two ends of the arc tube part 1. The arc tube part 1 is made of a transparent material, such as silica glass or the like. The discharge lamp 1 is operated using an alternating current, there being a pair of opposed tungsten electrodes 13, 14 in the interior of the arc tube part 11. The end regions of metal foils 15 are connected to base parts of the tungsten electrodes 13, 14 for purposes of power supply. The metal foils 15 are hermetically sealed in the hermetically sealed portions 12. The end region of an outer lead 16 is connected to the respective base part of the metal foil 15, with the base part projecting to the outside from the hermetically sealed portion 12.

The interior of the arc tube part 11 is filled with mercury, halogen gas and rare gas. To achieve a mercury vapor pressure in the interior during operation that is at least 200 atm, at least 0.2 mm/mg³ of mercury is added as the emitter. Mainly to prevent formation of blackening on the inside wall of the arc tube part 11 by means of the halogen cycle, 10⁻⁶ µmol/mm³ to 10⁻² µmol/mm³ of a halogen gas is added. To improve starting aid properties, about 0.0133 MPa of the rare gas is added.

As is shown in Figure 2, the electrode 13 has an electrode tip region 131 with a large diameter which is opposite the electrode tip region 141 of the other electrode 14 and of an upholding part of the electrode 132 which has a smaller diameter than the base part of the electrode tip region 131 and borders the base part of the electrode tip region 131. The electrode tip region 131 has a projection 131A, a region with a large diameter 131B which borders the projection 131A, and a coil-like starting aid part 131C which borders the region with a large diameter 131B.

The projection 131A is formed as either part of the tip of the upholding part of the electrode 132 and is equal to the outside diameter of the upholding part of the electrode 132 or is formed as a result of melting and is somewhat larger or smaller than the outside diameter of the upholding part of the electrode 132. The projection 131A forms and does not grow by operation of the ultra high pressure mercury lamp, but is formed from the start by the tip of the upholding part of the electrode 132. The thermal capacity of the region with a large diameter 131B can be increased, for example, by part of the wire-like material of tungsten which is wound around the upholding part of the electrode 132 being wound in the manner of a coil, melted and formed into a clump.

The starting aid part 131C is formed by a coil-like region which has not been melted in the formation of the above described region with a large diameter 131B. When the ultra high pressure mercury lamp starts, a rapid transition from a flow discharge into an arc discharge can take place since, by the coil shape of the starting aid part 131C, a gap between the pitches of the coil can easily constitute the starting point of the discharge and can be easily heated there by the coil shape. In steady-state operation of the ultra high pressure mercury lamp, the starting aid part 131C, due to its coil shape, by the asperities effect of the surface and the heat capacity, has the function of releasing heat.

The other electrode 14 is formed in the same way as the electrode 13. This means that it is formed of an electrode tip region 141 with a large diameter which is opposite the electrode tip region 131 of the electrode 13, and an upholding part of the electrode 142 which has a smaller diameter than the base part of the electrode tip region 141 and borders the base region of the electrode tip region 141. The electrode tip region 141 has a projection 141A, a region 141B bordering the projection 141A with a large diameter and a coil-like starting aid part 141C which borders the region with a large diameter 141B.

In the concave reflector 2, a light exit opening 21 is formed at the front edge of the reflection surface. Furthermore, a cylindrical hole 29 for supporting the discharge lamp is formed which borders the back end of the reflection surface and extends in the direction of the optical axis. A front glass 3 is installed in the light exit opening 21 to prevent lamp fragments from flying in the direction to the projector device in the case of breakage of the discharge lamp. Essentially in the middle region of the front glass 3, a lamp through opening 31 for insertion of the hermetically sealed portion 12 of the discharge lamp is formed. Part of the hermetically sealed portion 12 projects to the outside beyond the concave reflector 2.

The concave reflector 2 has the following three reflection surfaces:
- a front ellipsoid reflector part 22 which is provided with a light exit opening 21;
- a spherical reflector 24 with a front edge bordering the back end of the front ellipsoid reflector part 22; and
- a rear ellipsoid reflector part 26 with a front edge bordering the back end of the spherical reflector 24.

The front ellipsoid reflector part 22, the spherical reflector part 24 and the rear ellipsoid reflector part 26 can be formed in one piece with one another or also by coupling several independent components. In the concave reflector 2, the position of the first focal point of the front ellipsoid reflector part 22 and the position of the first focal point of the rear ellipsoid reflector part 26 agree and are located in front of a virtual plane which includes a border area P1 between the front ellipsoid reflector part 22 and the spherical reflector part 24. Furthermore, the position of the second focal point of the front ellipsoid reflector part 22 and the position of the second focal point of the rear ellipsoid reflector part 26 agree with one another.

The concave reflector 2 is made of a glass material such as, for example, silica glass or the like, on the inside of which a reflection film with the property of reflecting visible radiation and transmitting IR radiation is formed by vapor deposition or the like. The reflection film is a layer structure, for example, of silicon dioxide (SiO₂) and titanium dioxide (TiO₂)

The material of which the concave reflector 2 is formed is not limited to a glass material such as silica glass or the like, and a metallic material, such as copper, brass, iron, aluminum, silver, alloys thereof or the like, can be used. When the material of the concave reflector is a material, such as copper, brass or iron, in which the raw material does not inherently have a reflection property, it is necessary to attach the above described reflection film with the property of reflecting visible radiation to the inside of the concave reflector 2.

On the other hand, when the material of the concave reflector is a material such as aluminum or silver, in which the raw material inherently has a reflection property, it is not necessary to apply a reflection film which reflects visible rays on the inside of the concave reflector 2. However, in this case, IR radiation is reflected by the concave reflector 2 in addition to visible rays, so that either the front glass 3 which is installed in the light exit opening 21 of the concave reflector 2 should be coated with a substance which absorbs IR radiation, or outside the concave reflector 2, and moreover, in the vicinity of the front glass 3, there should be a means which absorbs IR radiation. If a further means for absorbing IR radiation is a means in which the inside of the concave reflector 2 is coated, for example, with chromium-containing, low thermal expansion glass or the like, the IR radiation can be absorbed, and moreover, an excess temperature increase in the concave reflector can be avoided by cooling of the outside of the concave reflector. This means is therefore advantageous.

In the light source device 10 in accordance with the invention, the front edge of the front ellipsoid reflector part 22 is located at a position which extends largely forward from the arc tube part 11 of the discharge lamp 1. Since arc spots are formed in the vicinity of the projections 131A, 141A in the discharge lamp 1 in accordance with the invention, the middle position P2 between the electrodes 13, 14 of the discharge lamp 1 agree with the first focal points of the front ellipsoid reflector part 22 and of the rear ellipsoid reflector part 26, and moreover, with the position of the spherical reflector part 24.

The light source device in accordance with the invention is characterized in that the middle P2 is positioned between the electrodes 13, 14 on the rear edge of the front ellipsoid reflector part 22 or on the front edge of the spherical reflector part 24, i.e., in front of the boundary region P1 between the front ellipsoid reflector part 22 and the spherical reflector part 24. The middle P2 between the electrodes 13, 14 is also called simply the "middle P2 between the electrodes" and the boundary region P1 between the front ellipsoid reflector part 22 and the spherical reflector part 24 is also called simply the "boundary region P1" below.

Light L1, L2 which is directly incident in the front ellipsoid reflector part 22 is focused by the above described light source device at the position of the second focal point of the front ellipsoid reflector part 22, as is shown in Figure 3. The light L3 which is incident in the spherical reflector part 24 is returned to the arc, afterwards passes through the arc and is reflected by the front ellipsoid reflector part 22, and is focused at the position of the second focal point of the front ellipsoid reflector part 22. The light L4 which is incident in the rear ellipsoid reflector part 26 is reflected from the rear ellipsoid reflector part 26 and is focused at the position of the second focal point.

This means that according to the example shown in Figure 3, in the region in which a disadvantageous result was produced in the conventional light source device shown in Figure 5, the light L2 is directly incident in the front ellipsoid reflector part 22 in the direction which orthogonally intersects the optical axis Z in that the middle P2 between the electrodes is located in front of the boundary region P1. Thus, it no longer happens that the above described light L2 moves back and forth on a line through the middle P2 between the electrodes to any two points on the spherical reflector part 24. Therefore, the illuminance on the focusing point can be increased more than in a conventional light source device.

As was described above, by positioning the middle P2 between the electrodes in front of the boundary region P1, the illuminance on the focusing point can be increased. However, if the middle P2 between the electrodes is extremely far in front of the boundary region P1, the illuminance does not always increase on the focusing point. This means that to increase the illuminance on the focusing point, it is necessary to position the middle P2 between the electrodes in conjunction with the boundary region P1 at the optimum position.

Therefore, in the light source device shown in Figure 1, it is advantageous to position the discharge lamp 1 with respect to the concave reflector 2 such that the angle X between a virtual line A between the boundary region P1 and the middle P2 between the electrodes and a line B which runs from the middle P2 between the electrodes parallel to the optical axis Z in the light emission direction satisfies the relationship 90° < X < 100°. That it is advantageous to position the discharge lamp 1 with respect to the concave reflector 2 such that this angular region is satisfied, was confirmed by the test described below which was carried out for optimum fixing of the positional relationship between the boundary region P1 and the middle P2 between the electrodes. The angle X between a virtual line A between the boundary region P and the middle P2 between the electrodes and a line B which runs from the middle P2 between the electrodes parallel to the optical axis Z in the light emission direction is simply called "angle X".

### (Embodiments)

With the arrangement shown in Figure 1, seven light source devices according to embodiments are described according to the specification described below.

### (Discharge lamp 1)

The total length is 50 mm, the distance between the electrodes is 1 mm, the amount of mercury added is 0.25 mg/mm³ and the rated wattage is 200 W.

### (Concave reflector 2)

### Front ellipsoid reflector part 22:

It has an ellipsoid with a large major axis of 34.05 mm and a small major axis of 19.29 mm. The opening diameter of the light exit opening 21 is 37.2 mm. The total length in the direction of the optical axis is adjusted in the region from 15.72 mm to 20.57 mm and has seven types.

### Spherical reflector part 24:

It has a spherical surface with a radius from 8 mm to 12 mm. The total length in the direction of the optical axis is adjusted in the region from 2.33 mm to 4.33 mm and has seven types.

### Rear ellipsoid reflector part 26:

It has an ellipsoid with a large major axis of 35.05 mm and a small major axis of 22.29 mm. The opening diameter of the hole 29 is 10 mm. The total length in the direction of the optical axis is set in the region from 1.2 mm to 3.96 mm (seven different values).

Using the above described discharge lamp and the seven different concave reflectors with different total lengths in the direction of the optical axis, seven light source devices with different positional relationships of the middle P2 between the electrodes and the boundary region P1 were produced. These seven light source devices correspond to embodiments 1 to 7. In the light source devices according to embodiments 1 to 7, the relationship between the angle X and the distance T of the middle P2 between the electrodes from the boundary region P1 in the direction of the optical axis forward (called simply "distance T") differ from one another, as is shown specifically below in Table 1.

### (Comparison example 1)

With the arrangement shown in Figure 4 according to the above described specification a light source device according to one comparison example was produced.

### (Discharge lamp 1)

Identical to the embodiments.

### (Concave reflector 2)

### Front ellipsoid reflector part 22:

It has an ellipsoid with a large major axis of 34.05 mm and a small major axis of 19.29 mm. The opening diameter of the light exit opening 21 is 37.2 mm The total length in the direction of the optical axis is 18.4 mm.

### Spherical reflector part 24:

It has a spherical surface with a radius of 11.4 mm. The total length in the direction of the optical axis is 4.16 mm.

### Rear ellipsoid reflector part 26:

It has an ellipsoid with a large major axis of 35.05 mm and a small major axis of 22.29 mm. The opening diameter of the hole (29) is 10 mm. The total length in the direction of the optical axis is 3.36 mm.

The relation between the distance T and the angle X is shown below in Table 1.

The discharge lamps of the light source devices according to the above described embodiments 1 to 7 and the comparison example were operated, a screen 5.0 mm long and 3.8 mm wide was irradiated with light, and the illuminance on the screen was measured. Table 1 shows the results. Table 1 shows the values of the illuminance which were obtained with the light source devices according to embodiments 1 to 7, in relative values, for which the value of the illuminance which was obtained using the light source device according to the comparison example was designated 1. Furthermore, in Table 1 positive values of the distance T constitute the state in which the middle P2 between the electrodes from the boundary region P1 in the direction of the optical axis Z is farther forward, and negative values of the distance T constitute the state in which the middle P2 between the electrodes from the boundary region P1 in the direction of the optical axis Z is farther to the rear.

**Table 1**

| | Distance T (mm) | Angle X (°) | Illuminance |
|---|---|---|---|
| Embodiment 1 | 2.36 | 105.2 | 0.988 |
| Embodiment 2 | 1.75 | 100.0 | 0.995 |
| Embodiment 3 | 1,14 | 96.5 | 1.014 |
| Embodiment 4 | 0.90 | 95.1 | 1.022 |
| Embodiment 5 | 0.66 | 93.6 | 1.033 |
| Embodiment 6 | 0.42 | 92.3 | 1.048 |
| Embodiment 7 | 0.17 | 90.9 | 1.01 |
| Comparison example | -0.55 | 87.2 | 1 |

The following fact was ascertained from the experimental results shown in Table 1.

In the case of positioning the discharge lamp with respect to the concave reflector such that the middle P2 between the electrodes of the discharge lamp is located in front of the virtual plane which includes the boundary region P1 of the concave reflector, and moreover, that the angle X is within a range 90° < X < 100°, as in the light source device according to embodiment 3 or 7, the illuminance on the screen increased by 1 % to 4.8 % compared to the case of positioning the discharge lamp with respect to the concave reflector such that the middle P2 between the electrodes of the discharge lamp is located behind the virtual plane including the boundary region P1 of the concave reflector, and that moreover, the angle X is 87.2°, as in the light source device according to the comparison example.

Especially for the light source device according to embodiment 4 or embodiment 6, in which the above described angle X satisfies the range 92.3° ≤ X ≤ 95.1°, it was ascertained that the illuminance on the screen compared to the light source device according to the comparison example has increased by 2.2 % to 4.8 % and that the illuminance on the screen is higher than for the light source devices according to the other embodiments.

In the case according to embodiments 1 and 2 that the above described angle X is greater than or equal to 100°, it was ascertained that for a light source device in which the middle P2 between the electrodes is unduly in front of the boundary region P1, due to the illuminance on the screen which is lower than for the light source device according to the comparison example, an increase of the illuminance on the screen cannot be expected.

As was described above, the illuminance on the screen as compared to the light source device according to the comparison example 4 was increased by 2.2 % to 4.8 % by the light source device according to embodiment 4 or embodiment 6. In a projector device in which the light source device in accordance with the invention is installed, generally an advantageous effect is exerted on the quality of the image which is projected onto the screen when the illuminance at the focusing point increases by another 1 %. An increase in illuminance by 2.2 % to 4.8 % therefore has an extremely great effect.

If the attempt is made to increase the illuminance by greater than or equal to 2 %, normally a method must inevitably be used in which the amount of mercury added within the discharge lamp is increased, and moreover, the wattage to be supplied to the discharge lamp increases, or similar methods. However, in the case of using such a method, there is the major possibility that new disadvantages are caused as an accompanying phenomenon. The light source device in accordance with the invention, however, has the advantage that, without increasing the operating wattage, the illuminance can be increased more than for a conventional light source device. Furthermore, the operating wattage which is necessary to obtain the same illuminance as a conventional light source device can be reduced. Therefore, it is also excellent with respect to reducing the environmental burden.

The light source device in accordance with the invention is not limited to the above described version, but various changes can also be undertaken. For example, a concave reflector can also be used which has only of a front ellipsoid reflector part and a spherical reflector part which borders the back end of the front ellipsoid reflector part and which has a reflection surface for which two curved surfaces with different curvatures border one another. Of course a concave reflector with a reflection surface can also be used in which at least four curved surfaces with different curvatures border one another.

An arrangement is also possible such that the light which has been reflected from the front ellipsoid reflector part and from the rear ellipsoid reflector part of the concave reflector is emitted from the light exit opening along the optical axis Z. Furthermore, an arrangement is also possible such that only the light which has been reflected from the front ellipsoid reflector part or from the rear ellipsoid reflector part of the concave reflector is emitted from the light exit opening along the optical axis Z.

In the case of using a discharge lamp 1 with a great thickness of the arc tube part 11 in the light source device 10 in accordance with the invention, it can be imagined that the light which is emitted from the arc which has been formed between the electrodes 13, 14, or the light which has been reflected from the spherical reflector part 24 in the direction to the arc refracts in passage through the arc tube part 11 as a result of the lens effect of the arc tube part 11. In this case, there is the danger that the light focused on the second focal points of the front ellipsoid reflector part 22 and of the rear ellipsoid reflector part 26 will be reduced, even if to a small degree. It is therefore advantageous to use a reflector with a reflection area which strictly speaking cannot be called an ellipsoid of revolution, but which is close to an ellipsoid of revolution.

The front ellipsoid reflector part 22 in accordance with the invention therefore comprises not only a reflection surface in the form of an ellipsoid of revolution, but also one with a reflection area which, strictly speaking, cannot be called an ellipsoid of revolution, but which is close to an ellipsoid of revolution.

For the same reason as the one described above, the spherical reflector part 24 is not limited to one with a spherical reflection area, but also comprises a reflection surface which, strictly speaking, is not a spherical surface, but which is however close to a spherical surface.

## Claims

1. Light source device which comprises:
- a discharge lamp having a discharge vessel with a pair of opposed electrodes therein,
- a concave reflector which has an ellipsoidal front reflector part which is provided with a light exit opening, and a spherical reflector part which borders a back end of the ellipsoidal front reflector part,
wherein a middle between the electrodes of the discharge lamp is arranged with respect to the concave reflector such that it is located in front of a virtual plane which includes a boundary region between the ellipsoidal front reflector part and the spherical reflector part.

2. Light source device in accordance with claim 1, wherein, in a cross section through a plane which contains an optical axis in a direction of light emission, an angle X between a line which runs from the middle between the electrodes to the border region between the front ellipsoid reflector part and the spherical reflector part, and a line which runs from the middle between the electrodes parallel to the optical axis in the direction of light emission, satisfies the relation 90° < X < 100°.

3. Light source device in accordance with claim 2, wherein the concave reflector has an ellipsoidal rear reflector part which borders a back end of the spherical reflector part.

4. Light source device in accordance with any one of the preceding claims, wherein the concave reflector has an ellipsoidal rear reflector part which borders a back end of the spherical reflector part.

5. Concave reflector which comprises:
- an ellipsoidal front reflector part which is provided with a light exit opening;
- a spherical reflector part which borders a back end of the ellipsoidal front reflector part; and
- an ellipsoidal rear reflector part which borders a back end of the spherical reflector part,
wherein a first focal point of the ellipsoidal front reflector part and a first focal point of the ellipsoidal rear reflector part are located in front of a virtual plane which includes a boundary region between the ellipsoidal front reflector part and the spherical reflector part.
